# EUROPEAN PATENT SPECIFICATION

(11) **EP 3 160 073 B1**
(45) Date of publication and mention of the grant of the patent: **05.08.2020**
(21) Application number: 15191130.2
(22) Date of filing: 22.10.2015
(51) Int. Cl.: H04L 1/00, H04Q 11/00

(54) **METHOD AND OPTICAL SWITCHING NODE FOR TRANSMITTING DATA PACKETS IN AN OPTICAL TRANSMISSION NETWORK**
VERFAHREN UND OPTISCHER SCHALTKNOTEN ZUR ÜBERTRAGUNG VON DATENPAKETEN IN EINEM OPTISCHEN ÜBERTRAGUNGSNETZWERK
PROCÉDÉ ET NOEUD DE COMMUTATION OPTIQUE POUR TRANSMETTRE DES PAQUETS DE DONNÉES DANS UN RÉSEAU DE TRANSMISSION OPTIQUE

(43) Date of publication of application: 26.04.2017
(73) Proprietor: Alcatel Lucent, 91620 Nozay (FR)
(72) Inventor: GEBHARD, Ulrich, 70435 Stuttgart (DE); SCHMALEN, Laurent, 70435 Stuttgart (DE); BUCHALI, Fred, 70435 Stuttgart (DE); LEVEN, Andreas, 70435 Stuttgart (DE)
(74) Representative: MERH-IP Matias Erny Reichl Hoffmann Patentanwälte PartG mbB

(56) References cited:
- WO-A1-2014/029430
- US-A1- 2005 131 940
- US-A1- 2014 286 440

## Description

The present document relates to optical data transmission systems. In particular, the present document relates to a method for including data packets into a container passing a node thereby aggregating data to be directed to a destination node.

Ethernet is the dominating interface in IP networks. Designed for local area networks, Ethernet can flexibly assign bandwidth to changing traffic patterns and allows point-to-multipoint communication. It does not bring with it, however, the error correction, monitoring, and recovery capabilities required for long-distance transport. In particular, the Forward Error Correction (FEC) needed for long-distance transport needs larger frame sizes than Ethernet packets have to be efficient. Therefore, Ethernet packets need encapsulation by a transport network, which allows the FEC to operate on blocks larger than a single Ethernet frame. Transport networks like SDH or OTH on the other hand are built for long-haul transmission, but are inelastic and require provisioning to follow traffic demand. Furthermore, transport networks have no addressing scheme, their point-to-point connections do not support multicast or broadcast communication.

Today, the IP/Ethernet-network topology is mapped link-by-link to fixed point-to-point transport connections. Transport receivers decode all traffic coming in from an upstream neighbor node and forward it to the higher protocol layer (IP and/or Ethernet), where it is examined for forwarding decision. This includes transit traffic -usually the larger fraction- which is handed back to the transport network for re-encoding and further propagation to downstream nodes or destinations. Ethernet packets are encapsulated in transport frames, in the following referred to as containers, at an upstream node and decapsulated and forwarded to a receiving router coupled with a downstream node. Encapsulation/decapsulation is performed either by an optical device connected to the router, or a line card/adapter plugged into the router. If packets addressed to different destination nodes are included in said containers, this leads to a mix of packets destined for different destinations. Each packet of said packet mix within the container has to be analyzed regarding its packet destination in order to separate transit traffic packets from packets addressed to a client coupled to the present node. This leads to large vertical interface capacity between the network layers. In case of multicast or broadcast traffic, multiple instances of the same packet may even be handed back to the transport network. Port capacity is expensive and going up and down the protocol stack in intermediate nodes increases packet-transfer delay.

US 2005/0131940 discloses a method of adding data at the nodes of a fiber optic transmission network by creating at a source node an optical resource comprising portions containing data packets addressed to a destination node and free portions that may be occupied by packets supplied by an intermediate node.

US 2014/0286440 discloses a method of forward error correction (FEC) which applies FEC encoding to a video stream at a current redundancy level for transmission and determines a new redundancy level at which the video stream is FEC encoded.

WO 2014/029430 discloses a method of distributing path delay data across a connection-oriented communications network by means of a signaling message from an upstream node of a traffic path including path delay data indicative of path delay incurred by at least the upstream node of the traffic path.

In a broad sense, there is a need to bring Ethernet flexibility to the transport network. More in detail, the present disclosure points out a method and an optical switching node which provide an improved flexibility and transmission resource usage when transmitting data packets in an optical transmission network.

The invention is defined in the appended claims.

According to a first aspect, a method for transmitting client data packets through an optical transmission network comprising multiple nodes is disclosed. Specifically, the method may be adapted to transmit data packets comprising address information, e.g. Ethernet packets or IP-packets.

In the disclosed method, a first container may be received at a node of the optical transmission network. The node may be arranged - according to the topology of the optical transmission network - between a source node and a destination node, the source node being the node at which the first container has been created and the destination node being the node to which the first container is to be transmitted. In other words, the node may be an intermediate node between the source node and the destination node. The first container comprises a container header and a container payload portion. The container header includes at least information regarding the destination node of the first container, e.g. container address information. The container payload portion includes a data portion comprising information associated with one or more client data packets that have been encapsulated in the container. For example, the client data packets may be included in the data portion. The data portion may have been transmitted by an upstream node, specifically the source node which has created the first container. The data portion (i.e. the client data packets) included in the first container is directed to the destination node of the container. For example, the data portion comprises one or more data packets addressed to a client entity coupled with the destination node. The container header may further comprise occupancy information indicative of the space occupied by the data portion in the container payload portion or about free space in the container payload portion.

After receiving the first container, information regarding a destination node of the first container may be evaluated. More in detail, destination node address information included in the container header may be read out and evaluated in order to determine whether the first container is a transit container (i.e. not destined for the present node at which the first container is received). If the received first container is a transit container (and the present node is therefor an intermediate node), it is determined whether free space is available in the container payload portion for carrying a further data portion. If free space is available, it may be determined next whether further data packets (also referred to as further client data packets) received at the present (intermediate) node, specifically from an attached switching or routing device (e.g. router, switch etc.) coupled with or included in said node, should be transmitted to said destination node. It is to be noted that the above determining steps may also be performed in the reverse order, i.e. it is first determined whether further data packets are available, and in the affirmative, it is determined whether free space is available in the container payload portion for carrying the further data packets in a further data portion.

If free space is available and further client data packets to be transmitted to the destination node are available at the intermediate node, a further data portion is included in the container payload portion, the further data portion comprising information associated with the further client data packets e.g. received from an upper network layer at the node. For example, the further data portion may comprise the received further client data packets.

Next, a second container is transmitted to a further node of the optical transmission network. Said transmission is performed in the optical domain, i.e. via a transmission link of the optical transmission network. The second container comprises a container header including updated occupancy information (reflecting the additional space occupied by the further data portion) and a container payload portion including both data portions (i.e. the data portion included in the first container and the further data portion, i.e. the data portion added by the intermediate node). The second container may be achieved by updating/modifying the first container or the second container is a new assembled container comprising data packets included in the first container. It is worth mentioning that the second container is destined to the same destination node than the received first container, i.e. the first and the second container comprises the same destination node information (address) in their headers.

Advantageously, the disclosed method enables an aggregation of multiple data packets, for example Ethernet data packets or IP data packets, of different source nodes in a container, wherein interface resources to higher network layers (vertical interface capacity) and decoding effort is significantly reduced by a fast decoding of the container header (preferably in the physical layer). The method enables to include further data packets received at an intermediate node (e.g. from an attached router) and addressed to the container's destination node into said container. Furthermore, free container capacity can be used more effectively and the container delay is significantly reduced because it is not necessary to completely decode the container for inserting data packets at an intermediate node.

The container payload portion of the received first container may further include forward error correction information associated with said data portion in the container payload portion. The forward error correction information may be updated and inserted in the container payload portion of the second container in order to protect the data portions included in said container payload portion of the second container against transmission errors. Updating FEC information may mean generating new forward error correction information or modifying existing forward error correction (FEC) information. In other words, FEC information may be included in the container payload portion of the second container which is associated with the data portion originally comprised within the first container and also with the further data portion which has been inserted to transmit information included in the further client data packets.

According to embodiments, the container payload portion may be segmented into blocks of a certain length (e.g. fixed) and said data portion is included in one or more of said blocks. Preferably, all containers have a fixed length (e.g. in the range of 5000 bit to 15000 bit, preferably about 10000 bit). By means of said blocks, the container payload portion is structured thereby facilitating the insertion of a further data portion in a non-occupied section of the container payload portion.

As already mentioned, the container header may comprise information regarding occupied or unused capacity of the container payload portion. For example, the information is a length indicator (e.g. pointer or counter) indicating the occupied or unused capacity of the container payload portion based on the number of occupied or unused blocks. Based on said information (which is available after decoding the container header) it is possible to determine whether (and how much) further data packets received at the respective node and addressed to the destination node of the container can be included in said container.

According to embodiments, the container header may comprise dedicated forward error correction information in order to protect the information included in the container header against transmission errors. In other words, the FEC included in the container header solely refers to information included in the container header and is used for decoding of said header information in order to remedy transmission errors. In yet other words, the container may comprise a modular FEC design with first FEC information included in the container header covering information included in the container header and second FEC information included in the container payload portion covering one or more data portions included in the container payload portion. Thereby, it is possible to process information included in the container header independent of information included in the container's payload portion.

According to embodiments, the node may perform a real-time conversion of the received optical data associated with the first container into the electrical domain. More in detail, a container processing entity included in a switching entity of the node converts the received optical signal in a digital electrical signal in order to provide a fast decoding of information included in the container header. Said container processing entity may be integrated in the physical network layer of the optical transmission system. Thereby, it is possible decode and interpret header information and decide whether the first container has to be routed out to an attached client entity because the container received its destination node, or client data packets may be included in the container payload portion. In other words, the local node decides, based on the decoded header information, whether the first container is completely decoded and its contained data packets forwarded to an attached client (device) because the local node is the destination node, or whether data packets from the attached client may be added to the container payload portion of the container in transit. If none of these actions is decided, the first container is forwarded unchanged.

According to embodiments, adding of said further data portion into the container payload portion and updating forward error information in the container payload portion may be performed in real-time. "Real-time processing" in the present document means that the processing of the container payload portion is performed on-line with the line rate of the incoming container. Other than a register which holds a portion of the container before the data is clocked out again, there is no further storage (decoupling container processing from the line rate of the transmission media) of containers or data packets included in a transit container before forwarding. The container header is processed on-the-fly (opto-electrical conversion, decoding) in order to quickly analyze its information and make a decision regarding the routing of the container and insertion of data packets. Said insertion is also performed on-the-fly, i.e. during container processing or with the clocking out of the container at the line rate of the transmission media.

According to embodiments, information included in the container header may be decoded in real-time, enabled by the very short size of the header and the independent forward error correction information of said container header. In other words, the information of the container header is available right after receiving the header and before its contained information is needed to process the remaining portion of the container or inserting additional data packets. A container processing entity for decoding of container information may be integrated in the physical network layer of the node, so, it is not necessary to provide the container to a higher network layer for decoding. After decoding of the header (and before completely receiving the container payload portion), at least the container's destination node and the occupied capacity of the container payload portion are available and may be processed. For example, decisions can be made if the container is terminated (because it reached its destination), or forwarded towards its destination, and whether further client data is available for inclusion in the forwarded container.

According to embodiments, information included in the container header may be modified if a further data portion is included in the container payload portion. Specifically, occupancy information regarding the occupied or unused capacity of the container payload portion is adapted according to the included further data packets. For example, said occupancy information indicates the number of occupied blocks, and said number of occupied blocks is increased based on the number of blocks which are additionally used by inserting further data packets. Furthermore, after adapting capacity information, new FEC information is established for the header, which is associated with container's destination node information (which remains unchanged) and new established capacity information.

According to embodiments, the further data portion may be processed by a data generation entity which additionally provides forward error correction information associated with said further data portion. For example, the data generation entity may create a "dummy" container or "dummy" container payload portion including one or more blocks which comprise data of the further data packets received at said node from the attached client. "dummy" container or "dummy" container payload portion according to the present disclosure means that a frame-like data structure is created which comprises the structure of a container or its payload portion. In said data structure, the further data portion is inserted. In addition, the data generation entity creates FEC information related to said further data portion and includes said FEC information into said "dummy" container or "dummy" container payload portion. In other words, after determining, that a first container has been received which is addressed to a destination node for which data packets to be included (forming the further data portion) are available, the data generation entity creates said "dummy" container or "dummy" container payload portion including the further data portion and the associated FEC information. Said generation of the "dummy" container or "dummy" container payload portion can be performed at least partially time-overlapping with the processing of data included in the container payload portion of the received first container.

According to embodiments, the further data portion may be arranged in a non-overlapping way in the payload portion of the second container with respect to the data portion included in the first container. Preferably, the further data portion is included in a block of the container payload portion which is adjacent to one or more blocks occupied by the already included data portion. Specifically, the next free block(s) may be used for including the further data portion in order to derive a continuous sequence of occupied and free blocks. The next free block may be derived based on information regarding occupied or unused capacity of the container payload portion included in the container header.

According to embodiments, a buffer for generating the second container based on information of the received first container, the further data portion and forward error correction information associated with said further data portion may be provided. Information regarding the destination node of the first container (destination address) may be directly copied into said buffer without any changes. Furthermore, adapted capacity information and modified FEC information (FEC referring to the data included in the container header) are inserted into the buffer. Said data (destination address, capacity information and FEC) form the data to be included in the header of the second container. In addition, the buffer receives the further data portion. As already mentioned before, the further data portion may be arranged in the buffer (and thus in the second container) according to capacity information in order to avoid data overlapping, i.e. in a way that the data portion and the further data portion do not overlap in the payload portion.

According to embodiments, the data portion of the second container is generated by combining the data portion included in the received first container, the further data portion, FEC information associated with the data portion, and FEC information associated with said further data portion by an XOR-operation. Said XOR-operation yields (due to the non-overlapping data portions) to a merging of information such that the container payload portion comprises the data portion of the first container and the further data portion and valid FEC information covering both data portions.

According to embodiments, forward error correction information included in the container payload portion is spread within the container payload portion. In other words, FEC information is not limited to the one or more dedicated blocks in which the data portions (originally included data portion(s) and currently inserted data portion) are arranged. For example, the FEC information is spread also over some or all unused blocks within the container payload portion. Thereby, a common FEC can be used for all blocks which significantly reduce FEC overhead.

According to embodiments, forward error correction information uses a linear forward error correction code, which is chosen such that valid forward error correction information is obtained by linearly superimposing a first and a second valid forward error correction information. Preferably, at least for coding of the data portions to be included in the container payload portion, such linear FEC code may be used. Said linear FEC code may be characterized such that the linear superposition of two valid FEC code segments yields to a valid code word. For example, a BCH-code (Bose-Chaudhuri-Hocquenghem-Codes) may be used.

According to embodiments, the method may further comprise investigating whether the destination node of the received first container is reached. Said check is advantageous because if the received first container has reached its final destination, any check for including a further data portion can be waived. If the destination node of the first container is reached, then the received client data packets may be forwarded to a client entity that is coupled with the destination node.

According to embodiments, in case that the destination node of the received first container has not been reached and free space is available in the container payload portion, the method may further comprise investigating whether further client data packets directed to the destination node of the first container are available at the node, e.g. have been received from a client entity. So in other words, in an intermediate node it is determined whether further client data packets received from attached client entities have been received which have to be transmitted to the destination node to which the first container is directed. Thus, unused capacity within the container can be padded if enough capacity is available within the container to include the available further client data packet.

According to a further aspect, an optical switching node for transmitting client data packets via an optical transmission network is disclosed. The optical switching node may comprise an optical input interface for receiving an optical signal carrying a first container directed to a destination node. The first container comprises a container header and a container payload portion, the container header comprising at least information regarding the destination node of the first container, wherein the container payload portion comprises a data portion including information associated with one or more client data packets and optionally forward error correction information associated with said data portion. The container header further comprises occupancy information indicative of the space occupied by the data portion in the container payload portion or about free space in the container payload portion.

The optical switching node may further comprise a decoder for decoding information regarding the destination node of the first container. The decoder may decode address information for the destination node from the container header.

The optical switching node may further comprise a client input interface for receiving client data packets directed to the destination node of the first container, e.g. from an upper network layer. The client input interface may be coupled with a client entity.

In addition, a processing unit adapted to determine if free space is available in the container payload portion of the received container for carrying a further data portion and to include the further data portion comprising information associated with the received client data packets into the container payload portion of a second container may be provided. The processing unit may be further adapted to update the forward error correction information received in the container payload portion of the first container in order to protect the data portions included in the container payload portion of the second container against transmission errors.

An optical output interface for providing an optical signal representing the second container may be provided. The second container comprises a container header including updated occupancy information (reflecting the added further data portion) and a container payload portion including both data portions. Said second container is then transmitted via the optical transmission network to another node in the network. Optionally, the container payload portion may comprise the updated forward error correction information.

The optical switching node may further comprise a container processing entity to perform a real-time decoding of information included in the container header based on the header information fields and FEC information of said container header.

The optical switching node may further comprise a data generation entity to generate the further data portion and provide FEC information associated with said further data portion. The data generation entity may comprise a buffer for generating the second container based on information of the received first container, the further data portion and FEC information associated with said further data portion.

According to embodiments, the data generation entity may be adapted to generate the data to be included in the payload portion of the second container by combining the FEC protected data portion and the FEC protected further data portion by means of a XOR-operation. Thereby, a very time-efficient generation of data to be included in the payload portion of the second container is obtained. It should be noted that the methods and systems including its preferred embodiments as outlined in the present patent application may be used stand-alone or in combination with the other methods and systems disclosed in this document. Furthermore, all aspects of the methods and systems outlined in the present patent application may be combined according to the attached claims.

The invention is explained below in an exemplary manner with reference to the accompanying drawings, wherein
- Fig. 1: schematically illustrates an example diagram of an optical data transmission system including multiple nodes;
- Fig. 2: schematically illustrates the structure of a container adapted for an aggregated transmission of data packets;
- Fig. 3: schematically illustrates a portion of an optical network with detailed intermediate node architecture;
- Fig. 4: schematically illustrates the structure of a processing unit being adapted to include data packets in a container;
- Fig. 5: schematically illustrates the generation of a resulting payload portion based on existing first and second payload portions;
- Fig. 6: schematically illustrates the example generation of a container based on information of a received container and a new frame to be included in the received container payload portion;
- Fig. 7: schematically illustrates the method steps of a method for including data packets into a received container; and
- Fig. 8: schematically illustrates a flow chart showing the process of establishing a new or modified container based on a received container and data packets to be included in said container.

In a broad sense, a method is disclosed which allows to build containers for long-distance transport, whose unused capacity can be used by downstream nodes. In addition, a method is disclosed, how these containers can be accessed by the downstream nodes. This method may be integrated into the physical layer (L0/L1 according to OSI-model). Two components are proposed for the method: first, a modular forward error correction (FEC) design, and, second, an extremely fast recoding of the FEC in intermediate nodes, if they have packets to add and thereby change the content of the container. In addition, an access protocol is provided which encodes and conveys information about the unused capacity and controls access to it.

The containers may use an embodiment of an optical express header as described below. The optical express header may be included in a container header of a container to be transmitted within an optical transport network. Said optical express header may be adapted to be decoded very fast and reliable by a receiver node without the need to decode the entire frame. The express header carries destination-node address information which allows distinguishing between transit traffic and traffic destined for the local node.

The container payload may be structured into blocks. Said blocks may be of equal size (e.g. of size about 10000 bit) or may have different size. Each block is associated with forward error correction (FEC) overhead. In case that the container is only partly filled, empty blocks carry fixed dummy symbols with FEC overhead computed as if they were payload symbols. An integer number of blocks can be added to a container passing by, if it has enough free space. The container express header may comprise information about the unused capacity of the container. A length (LEN) field may be indicative for the number of occupied or unused blocks. Since the container has fixed length, all transit nodes know, how many blocks are free/occupied.

The destination-address field in the container express header (X-DA) indicates the destination of the container. By using said destination-address information, a node is able to check whether it has data packets to add. If it has packets to add to said destination, said data packets are inserted in the container and the required number of blocks is added to the length field. Preferably, the FEC information of all involved blocks is overwritten by a simple XOR operation. To be able to process an incoming container, modify it, and forward it with minimum delay, two container buffers may be kept: one for decoding the incoming frame and one for constructing the new, modified container based on the decoded information and reflecting the added payload.

In the following, the generation of a new container based on information of the received container and the added data to be included in the container at the current node is explained in a concise way. At a first point of time, the express header of an incoming container has been read, and the optical node looks up whether it has packets - provided by a client coupled with the node - to send to the destination indicated by the destination-address field. The destination-address field (X-DA) can be directly copied into the new frame in a buffer for generating the new container (also called construction buffer in the following). The local node knows how many blocks are free in the container (using the LEN field), decides whether one or more of these packets fit into the free blocks and can already compute the new LEN field (old LEN + number of added blocks). In addition, also the new FEC for the express header (X-FEC) can be derived. The new LEN field and the new FEC can be written to the construction buffer.

Having read the occupied blocks of the incoming container at a second point of time subsequent to the first point of time, all the information for computing the new container and its FEC are available, because the content of the free blocks is evident and the content of the blocks to be added are known. The result is written to the construction buffer. The container header generated within the construction buffer is provided at the output line. After the container header has been transmitted, an XOR operation is applied to the payload, thereby combining on the fly payload information of the received container and the payload information included in the construction buffer. In case of a transit-only container to which nothing is added, the incoming container is forwarded unchanged.

In order to protect the container payload portion against transmission errors, FEC information is associated with the data included in the container payload portion. The payload FEC information of the new container is generated by exploiting the linearity of the FEC code (e.g. using parity bits). Two code segments of a systematic code are generated where the data portions are non-overlapping and the rest of the codeword is stuffed with zeros. It is assumed that this generation of code bits is distributed among the network, i.e., a first node fills a first portion of the systematic part of the codeword, and then parity bits are generated for this codeword and transmitted. In the downstream node, a second information part is added to the codeword by taking an empty codeword and placing the new information part in a section which is non-overlapping with the section where the original data from the first node was placed. This placement can be obtained e.g., from the LEN field. Then new parity-bits for this second information sequences are generated using the encoding operation. Finally, the new combined codeword to be forwarded to the line is obtained on the fly by an XOR operation. In other words, the payload information of the incoming container (that may contain uncorrected errors) is linearly superposed using XOR with a new generated container structure that contains a new data portion at a non-overlapping, free position.

In the following, embodiments of the method for transmitting client data packets through an optical transmission network, respectively, an optical switching node to be included in an optical transmission network are disclosed in closer detail.

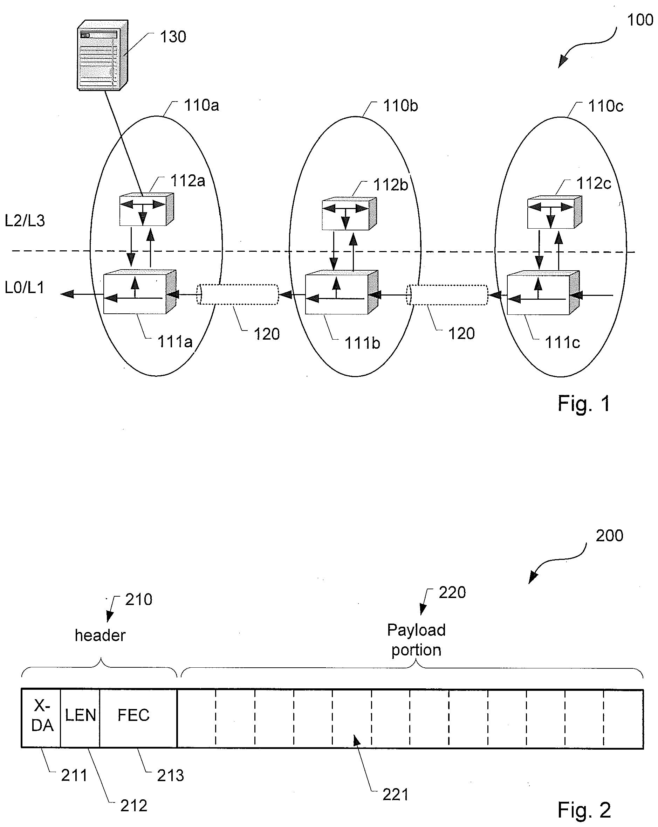

Fig. 1 schematically illustrates an example architecture of an optical transmission system 100. The architecture comprises multiple nodes 110a, 110b, 110c which are interconnected by optical transmission links 120. The optical transmission links 120 may be optical fibers. The optical transmission system 100 may be adapted to support WDM, i.e. the information may be transmitted through the optical transmission system 100 using multiple different wavelengths. Each node 110a, 110b, 110c or a subset of nodes 110a, 110b, 110c may comprise a switching entity 111a, 111b, 111c. Said switching entity 111a, 111b, 111c may be included in the optical transmission layer (L0/L1 according to OSI-model), i.e. may be coupled with one or more optical transmission links 120. Each switching entity 111a, 111b, 111c may be coupled with a switching or routing device 112a, 112b, 112c included in an upper network layer (e.g. layers L2/L3 of the OSI-model). The switching or routing device 112a, 112b, 112c may be adapted to receive data from its corresponding switching entity 111a, 111b, 111c. For example, said data may be routed by the switching entity 111a, 111b, 111c to the switching or routing device 112a, 112b, 112c in order to forward said data to a client entity 130 coupled with the switching or routing device 112a, 112b, 112c. In the opposite direction, the switching or routing device 112a, 112b, 112c may receive data packets from a client entity 130 in order to transmit said data packets via the optical transmission system 100 to a destination node. The switching or routing device 112a, 112b, 112c then forwards the received data packets to the switching entity (optical node) 111a, 111b, 111c in order to be transmitted via the one or more optical transmission links 120.

More precisely, data packets (specifically Ethernet or IP packets) from a client switching or routing device 112a included in the upper network layer are received by the optical node 111a. The optical node 111a is connected to a shared, bidirectional, optical transmission media providing a synchronous bit stream at a rate in the order of Terabit/s to which also other optical nodes 111b, 111c are connected. The optical node 111a transmits packets to these other nodes via one direction of this transmission media. In the same way, the optical node may receive packets from the other nodes in the network via the other direction of the transmission media. The optical node 111a acts as forwarder between its attached upper layer device 112a and remote upper-layer devices 112b,112c via its remote optical peer nodes 111b, 111c.

In other embodiments, client entity 130 (e.g. a server computer or a personal computer) is directly coupled with a switching entity 111a, 111b, 111c and generates Ethernet packets (i.e. client data) for transmission over the optical network. These Ethernet packets may be inserted by the node 111 into a transit container as described above. Further, the client entity 130 may receive Ethernet packets from the node 111, the Ethernet packets received in a container at the node being the destination of the container.

Fig. 2 shows an example embodiment of a container 200 to be transmitted in the optical transmission system 100. The container 200 comprises a container header 210 and a container payload portion 220. In order to save interface resources and processing resources at the switching or routing devices 112a, 112b, 112c, the containers 200 transmitted between the switching entities 111a, 111b, 111c comprise a container header 210 (for example, the upper-mentioned express header), the container header 210 including information regarding a destination node of the container 200. According to an embodiment, the container header 210 comprises a reduced number of bits, e.g. 40 to 70 bits, preferably 50 to 60 bits in order to be processed quickly. For example, the container header may comprise a first header section 211 comprising destination node address information (X-DA). Destination node address information indicates that all data included in the container 200 are directed to a node 110a, 110b, 110c associated with said destination node address information. When passing a certain switching entity 111a, 111b, 111c, the destination node address information is analyzed in order to be able to decide whether data packets received at the node 110a, 110b, 110c including said switching entity 111a, 111b, 111c are directed to said destination node or client data packets should be included in said container 200.

Furthermore, the container header 210 may comprise a second header section 212, said second header section 212 comprising information being indicative for the used/unused capacity of the container payload portion 220 (LEN). In case that the container payload portion 220 is segmented in a plurality of blocks 221 having equal length, the second header section 212 may indicate the number of occupied and/or free blocks 221. Preferably, the container 200 may comprise a fixed payload portion capacity comprising a fixed number of blocks 221. Thus, it may be sufficient to indicate either the number of occupied blocks 221 or the number of free blocks 221 in order to determine the used/unused capacity of the payload portion 220.

Finally, the container header 210 may comprise a third header section 213, said third header section 213 comprising FEC information. The FEC information included in the container header 210 may only refer to information included in the container header 210, i.e. in case of transmission errors, the container header information can be recovered by said FEC information. In other words, the container 200 is protected against transmission errors using a modular FEC configuration, said modular FEC configuration using first FEC information referring only to the container header 210 and second FEC information referring only to the container payload portion 220.

Said upper-mentioned container header 210 is adapted to be decoded in real-time by an intermediated node arranged between the source node and the destination node in order to determine the destination node and the free capacity of the container 200. Depending on said information, the intermediate node is able to determine whether data packets received at said intermediate node from a client router for transmission via the optical transmission network to said destination node should be included in said container, and whether free capacity of the container payload 220 is sufficient for transmitting at least a portion of said data packets.

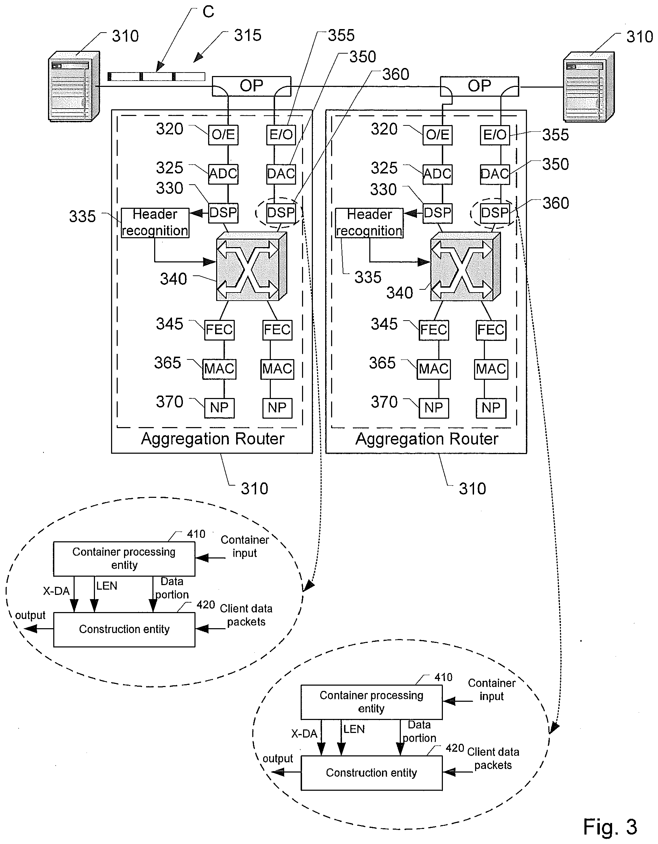

Fig. 3 shows an Optical Ethernet Bus with four nodes 310 and a zoom-in on two middle nodes 310 to describe the node architecture in detail. The optical Ethernet bus is a shared medium operating in time multiplex and allows transmission of containers between arbitrary pairs of bus participants (nodes) without the need for setting up explicit connections. The shared medium is based on point-to-point fiber links between respective two adjacent nodes. The optical Ethernet bus can be single-wavelength, but is typically a Wavelength Division Multiplex (WDM) system carrying a synchronous, digital container structure 315. This container structure may be fundamentally different from known technologies like SDH or OTH. As shown in Fig. 2, the container C is divided into header and payload. Header and payload may be modulated with a different modulation format. For example, the modulation format of the header is extremely robust against transmission errors (e.g. 4-PSK DP) and may have a strong Forward Error Correction (FEC) to guarantee secure decoding, while for the payload a more efficient modulation format is chosen (e.g. 32-QAM-DP). Further details on the modulation and transmission schema for containers are disclosed in previous European patent application EP15305633.8 filed on April 24, 2015which is incorporated in reference in its entirety.

Said two intermediate nodes 310 may each comprise an aggregation router. Within said aggregation router, a received optical signal is converted from the optical domain into the electrical domain (O/E converter 320) and converted from the analog domain in the digital domain (A/D converter 325). Symbols of the applied modulation schema and corresponding digital data are reconstructed by digital signal processor (DSP 330). A header recognition and decoding entity 335 examines the received and reconstructed digital container header in real time and decides whether to forward the container C downstream (to the following node 310) or hand it over to decoding block (FEC 345) which recovers the container content and delivers it to a client MAC unit 365.

Note that the scenario shown in Figure 3 assumes that the OE interface (comprising all blocks from FEC 345 to the optics plug OP) is part of a router line card and the Ethernet MAC (Media access control) layer of a router is the client transmitting and receiving Ethernet packets to/from the transmission part. The optics plug OP may be an electro-mechanical connector which bypasses the node when the plug is removed, i.e. it connects incoming line to outgoing line, and which puts the node 310 in between incoming and outgoing line when the plug is inserted. This is to keep the optical bus working if a node is added or removed. Another implementation option would be to have the functional blocks split through the MAC layer in two devices: an optical access device with all blocks except network processor (NP 370), and a router line card with NP and MAC, the MAC layers of both devices connected via an Ethernet interface. The blocks of the OE interface are typically implemented in an ASIC. The network processor 370 may be a programmable device optimized for processing network data packets. Specifically, it may be designed to handle tasks commonly associated with the upper layers of the seven-layer OSI networking model such as header parsing, pattern matching, bit-field manipulation, table look-ups, packet modification, and data movement. The network processor 370 may in particular process the stack of the protocol used by the client data/packets, e.g. Ethernet or IP and may perform format conversion, etc. One or more client entities 130 (not shown in Fig. 3) acting as source of destination of client data may be coupled with node 310.

It must be noted that the payload of a received container is only decoded if the container C is destined for the local router MAC. If it is a transit container, the payload is never handed over to the local FEC entity 345, instead the switching block 340 performs a bypassing of the container C, i.e. the container C is not decoded in the local decoding stack but is reconverted from digital to analog (DAC-block 350) and from electrical to optical (E/O converter 355) and immediately forwarded.

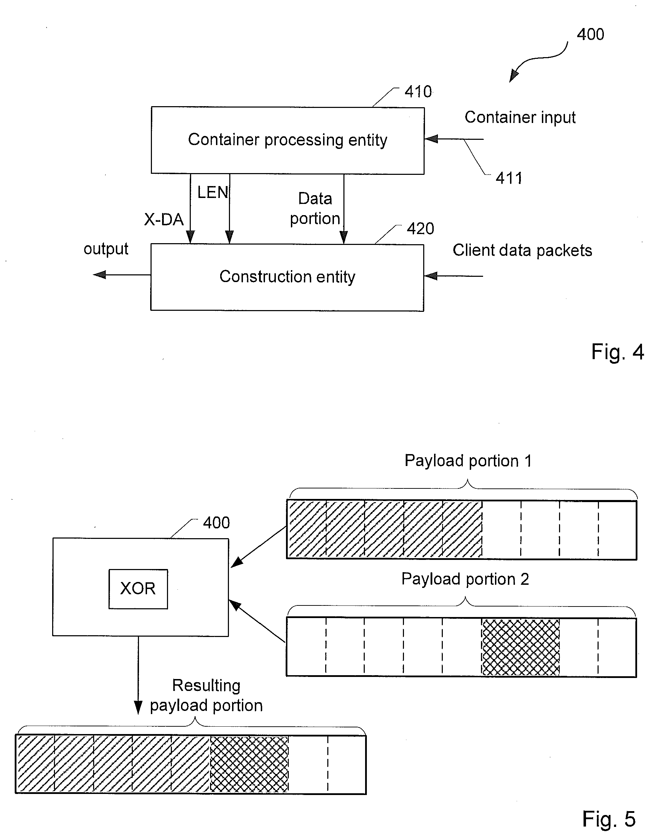

Fig. 3 further shows an inlay representing an example implementation for processing container C and generating a new container for transmission to another node by a container processing entity 410 and a container construction entity 420. Details thereof will be presented below in connection with Fig. 4. Container processing and generation may be implemented on any processing entity such as DSPs 330 and 360.

Fig. 4 illustrates a schematic diagram of a processing unit 400 being adapted to include data packets received at an intermediate node and addressed to a certain destination node to a container 200 being addressed to said destination node. The processing entity 400 may be comprised within the switching entities 111a, 111b, 111c of the respective nodes 110a, 110b, 110c, i.e. comprised in the physical network layer.

The processing unit 400 comprises a container processing entity 410 and a data generation entity 420. The container processing entity 410 comprises an input 411 which is coupled with an optical transmission link 120. Preferably, the container processing entity 410 receives via said input 411 containers 200 transmitted via the optical transmission link 120. The containers 200 may be provided either in the optical domain or in the electrical domain. In case that providing optical data to the container processing entity 410, an opto-electrical conversion may be performed within the container processing entity 410 in order to obtain a stream of bits in the electrical domain. Said stream of bits may be provided to an input register included in the container processing entity 410. According to a preferred embodiment, the container processing entity 410 is adapted to process the information comprised in real-time, i.e. there is no or essential no (only some bit cycles) delay caused by signal processing within the container processing entity 410.

The container processing entity 410 interacts with the data generation entity 420 in order to provide an on-the-fly insertion (real-time without or essentially without delay) of data in a container 200. The data generation entity 420 is adapted to prepare the data packets to be included in the container 200 and merge said prepared data with the data already included in the received container 200 in order to obtain a new container 200 (in the following referred to as second container) to be forwarded towards the destination node via the optical transmission link 120 coupled with an output of the intermediate node. "New container" in the present context means either a new created container or a modified existing container.

First, the container processing entity 410 is adapted to decode the information comprised within the container header 210. More in detail, the container processing entity 410 may comprise a decoder which uses the FEC information (included in the third header section 213) for decoding the header information. Thereby transmission errors of data included in the container header 210 are remedied. The data generation entity 420 may establish the new container 200 based on decoded header information of the received container 200. More in detail, the destination node address (X-DA) may be directly transferred into the new container header 210 because the container's destination remains unchanged.

In addition, the occupied/unused capacity information (LEN) may be provided to the data generation entity 420. In case that said intermediate node has client data to be included in said container 200, capacity information has to be adapted according to the amount of data to be included in the container 200. In other words, the amount of data to be inserted in said container 200 is identified and capacity information is modified based on prior capacity information and the amount of data to be included.

After modifying capacity information to be included in the container header 210, new FEC information for protecting the data of the container header 210 can be established and inserted in the FEC field of the container header 210 of the new container 200. Upper-mentioned processing for establishing data to be included in the container header 210 of the new container 200 may be performed at least partially time-overlapping with processing data included in the container payload portion 220. It is worth mentioning that the received container is forwarded unchanged to a downstream node if no information is added to the container payload portion 220 and the node at which the container 200 is received is not the destination node.

In addition, the data included in the payload section 220 of the received container 200 and the data to be added to the container 200 at the intermediate node (i.e. data provided by higher network layers) have to be included in the payload section 220 of the new container 200. For this purpose, the data generation entity 420 receives the data to be added to the received container at the intermediate node from the respective switching or routing device 112a, 112b, 112c. Furthermore, the data generation entity 420 receives the data included in the payload section 220 of the received container 200 from the container processing entity 410. Based on said information, the data generation entity 420 is able to establish the new container. Preferably, the data portion(s) already included in the payload section 220 of the received container 200 (referred to as original data portion) is merged with client data packets without FEC decoding said original data portion(s).

Preferably, the unused capacity of the container 200 (e.g. unused blocks) is filled with known dummy data. Therefore, not the data of whole payload portion 220 of the container 200 has to be read out by the container processing entity 410 but only the section covered by payload data (non-dummy data in the payload section) because the dummy data are already known by the processing unit 400. The payload data and the dummy data may be covered by common FEC information. The common FEC information may be included in the container payload portion 220 and may be distributed over multiple blocks 221 of said container payload portion 220 or over all blocks 221 included in the container payload portion 220. For example, FEC information may be parity bits which are spread over a limited section of the container payload portion 220 (subset of all blocks) or the whole container payload portion 220.

According to embodiments, a linear FEC code may be used, i.e. a superposition of two valid FEC codes yields to a new valid FEC code. For example, a BCH-Code (Bose-Chaudhuri-Hocquenghem-Codes) may be used which is a cyclic error correction code. Thereby it is possible to superimpose the FEC-coded data included in the received container payload portion 220 and FEC-coded data corresponding with the data to be added to the container thereby obtaining payload data which are coded with a valid FEC-code.

In embodiments, the above described functions for processing and generating containers may be implemented as software on a generic processing unit, or as a combination of hard and software units, e.g. based on an interaction of DSP 330, 360, header recognition and decoding entity 335, and decoding block (FEC) 345 as shown in Fig. 3. These units may be implemented (possibly together with other functions) as ASICs or FPGAs.

Fig. 5 schematically visualizes the generation of the data to be included in the payload portion of the new container (in the figure referred to as resulting payload portion) based on a first payload portion (payload portion 1) of the received container 200 and a second payload portion (payload portion 2) being generated by the data generation entity 420 based on the data packets received from a client entity e.g. via upper network layers. The second payload portion (payload portion 2) may be construed in a register or buffer - also referred to as construction buffer - of the data generation entity 420 by placing the data received from the client entity at a position within the payload portion which does not interfere with a position within the payload portion, at which the original data portion is included in the received container. More in detail, the data received from upper network layers may be included in blocks 221 of the second payload portion which are different to the corresponding blocks 221 of the first payload portion already occupied by payload data.

In addition, the data generation entity 420 may provide a FEC coding of the data to be included in the second payload portion. As already mentioned before, said FEC code may be not limited to the blocks 221 occupied by payload data but may be also spread over other blocks 221 or may be spread over the whole payload portion 220.

As shown in Fig. 5, the resulting payload portion may be generated by applying an XOR-operation on the data included in the first and second payload portion. By using a linear FEC code, the code word included in the first payload portion (e.g. the non-decoded payload data of the received container including FEC information) and the code word included in the second payload portion (obtained by FEC-coding of the data packets received from upper network layers) is superimposed thereby obtaining a new code word which is valid for the resulting payload data (merged payload data of first and second payload portion).

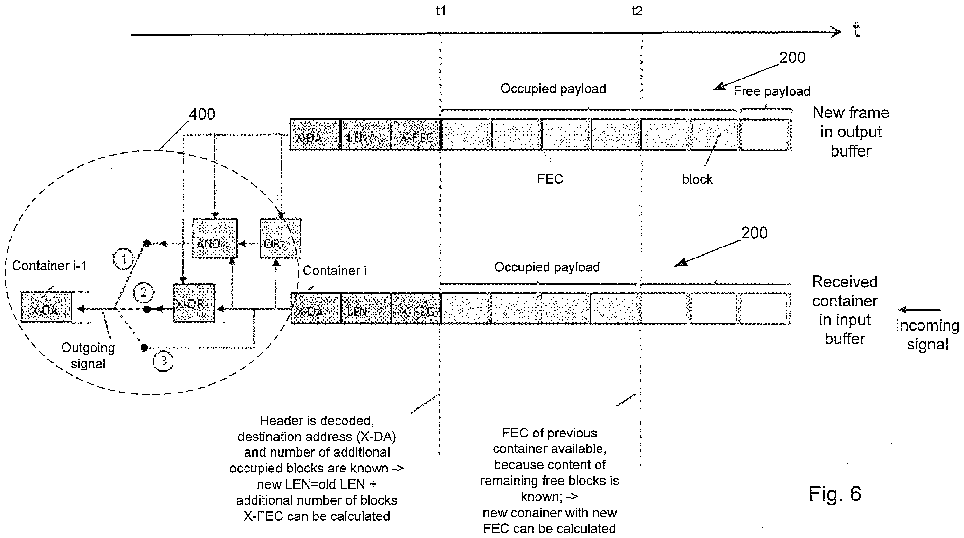

Fig. 6 illustrates the processing of an incoming container 200, the decoding steps in time together with the respective action triggered, and the generation of the outgoing container at the output line of the node. In this example, the incoming container is modified and additional information is added in real time in order to transmit an outgoing container. In other examples, a completely new container is generated first before being transmitted. At point of time t1, the container header 210 of a received container 200 has been read, and the node looks up whether it has packets to send to this destination. The destination address (X-DA) field can be directly copied to the new container in the output buffer as it does not change. The node knows how many blocks are free (LEN field), decides whether one or more of the received further client data packets fit into the free blocks and can already compute the new LEN field (old LEN + number of added blocks). Hence, the node can determine the new FEC for the container header (X-FEC) and write the new header to the output buffer. Having read the occupied blocks of the received container at point of time t2, all information for computing the new container and its FEC are available, because the content of the free blocks is evident and the content of blocks to be added is known. The result is written to the output buffer. Applying an OR+AND logic chain to the container header part (switch position 1) as shown in Fig.6 yields the signal of the output buffer at the output line for transmitting the updated header. After the container header has been transmitted, the outgoing line is connected to switch position 2 such that an XOR operation is applied to the container payload portions to yield the signal for the new container that is transmitted to another node in the network. In case of a transit-only frame to which nothing is added, the switch is moved to position 3 to forward the received container unchanged.

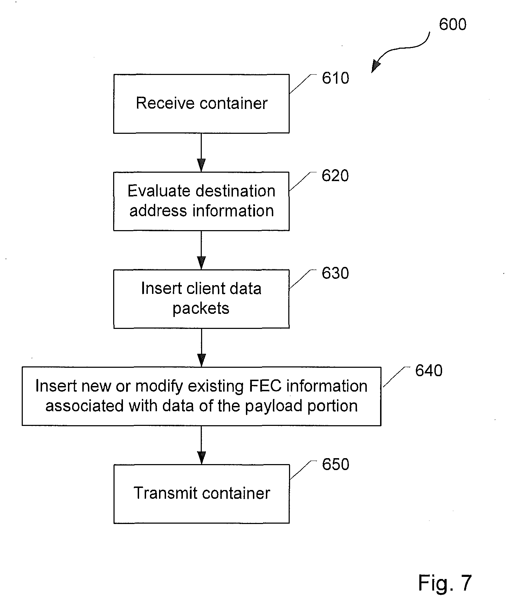

Fig. 7 shows a schematic diagram of a method 600 for transmitting data through an optical transmission network.

First, a container 200 is received at a node 110a, 110b, 110c (610). As mentioned before, the container 200 comprises a container header 210 and a container payload portion 220. The container header 220 comprises at least information regarding a destination node of the container 200.

Following up, information regarding a destination node of the container 200 is evaluated at said node (620), specifically by a container processing entity 410 included in the node. This step may comprise checking if the node has client data to be added to the container and if so, further checking if the container has enough available (free) space for adding one or more blocks of this client data.

In case that the node intends to insert client data packets into the container addressed to the destination node, a further data portion is included to the container payload portion (630). The further data portion comprises information associated with client data packets received from an upper network layer at the node, wherein said client data packets are directed to the destination node of the container.

In order to protect the data portions (the original data portion included in the received container 200 and the further data portion being associated with data packets actually received from a client entity 130) included in said container payload area 220 against transmission errors, new forward error correction information is inserted or existing forward error correction information is modified in the container payload area 220 (640).

Finally, the container 200 is transmitted in the optical domain to a downstream node using the optical transmission network (650).

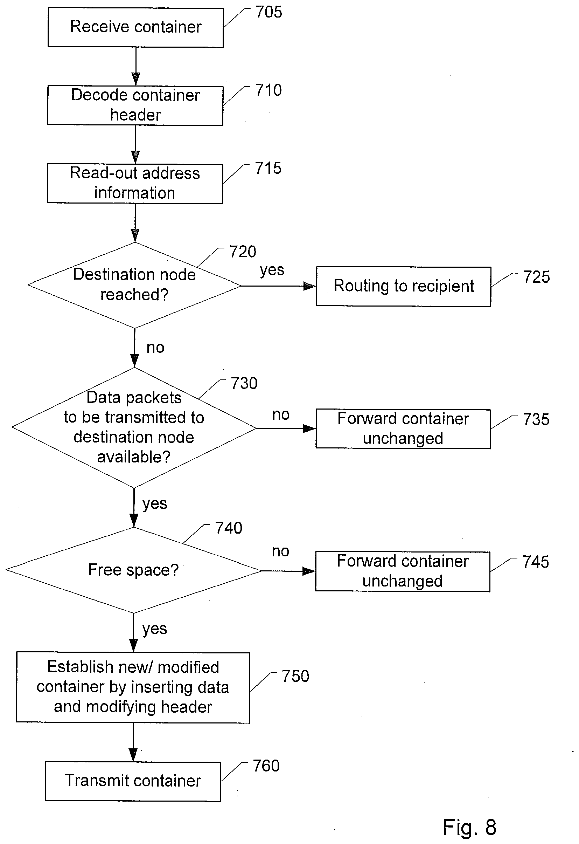

Fig. 8 shows a flow chart illustrating the steps for inserting data packets in an existing container 200 at intermediate nodes.

After receiving a container 200 (705) at a node, the container header 210 is decoded (710). More in detail, the container header 210 may be FEC-coded and FEC information included in the container header 210 may be used to decode the header content in order to obtain transmission error-free header content.

Following up, address information (X-DA) indicating the destination address of the container 200 is read out of the container header 210 (715) in order to determine the destination node of the container 200.

Based on said address information, it is determined whether the present node which currently has received the container 200 is the destination node of said container (720). If so, the container 200 is forwarded to a switching or routing device for routing the traffic to the intended recipient, e.g. a client unit coupled with the present node (725).

If the present node is not the destination node, it is investigated whether additional data packets to be transmitted to the destination node are available at the present node (730). These data packets may have been received from a client unit coupled with the present node. If not, the container 200 is forwarded unchanged to the next downstream node at which the process is repeated (735). Otherwise, it is investigated if the container 200 has free space to include one or more client data packets destined to the destination node (740). The determination if the container has free space may be based on the header length filed (LEN). It is to be noted that the above determining steps (730, 740) may also be performed in the reverse order, i.e. it is first determined whether free space is available in the container payload portion for carrying further data packets and then it is determined whether further data packets are available.

If there is not enough space in the present container 200 to carry further payload, said container 200 is forwarded unchanged to the next downstream node (745). Otherwise, a new or modified container 200 is established which comprises both, the data (payload) already included in the received container 200 and the data to be included by the present node (750). As explained above, a new container may be assembled based on the received container and the additional data packets before transmission, the received container may be modified by inserting the additional data packets, or a new container may be formed on the fly during transmission. Further, FEC information in the container payload may be updated to cover the extended payload. Furthermore, the container header 210 of the new or modified container 200 is adapted according to the inserted data. This specifically involves adapting information regarding the occupied/free capacity of the container 200 and FEC information covering the container header 210.

Finally, the new or modified container 200 is transmitted via the optical transmission link towards the following downstream node (760), thereby carrying piggyback the additional data packets to their destination without producing additional traffic on the network as only unused container capacity is used and filled up.

Summing up, a method and optical switching node for transmitting data in an optical transmission network has been described. The method / optical switching node introduces aggregated packet switching directly on the physical layer, i.e. it is integrated into the basic layer of the optical transmission system. Transport bandwidth can be shared by multiple stations like with IP over WDM, but router port capacity and hence CAPEX (Capital expenditure) is significantly reduced, same as router-facing port capacity of optical transport nodes. Decoding effort in transit nodes is also significantly reduced, because only the express header is fully decoded while for the remainder of the container the bits are only reconstructed using a hard-decision FEC, their content is not evaluated. As the overall processing is reduced, this also means faster forwarding, smaller footprint, and less power consumption.

Advantageously, free container capacity of an established container addressed to a certain destination node can be used by intermediate stations. This can significantly improve utilization and at the same time reduce latency caused by waiting for containers to be filled at the source node. The maximum waiting time before sending a container which is not full can be reduced, because the free capacity can be used by downstream nodes and is not lost.

One main difference with respect to state of the art implementations is that in the proposed node architecture (according e.g. to Fig. 3, right path) client data from the MAC layer can be added, encoded in the FEC block and added to free space in the container as if a new container is constructed. The new encoded data can be added without decoding the incoming payload data. Preferably, the chosen FEC is a linear code and can be added in the process of forwarding the container.

The advantage of the proposed architecture vs. e.g. SDH/OTH is that complete FEC processing is only needed in the destination node which saves a lot of resources and power consumption in transit nodes. In addition, the proposed architecture allocates bandwidth to source-destination pairs on a container-by-container basis and not as a permanent point-to-point link with fixed capacity.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within the scope of the attached claims. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Method for transmitting client data packets through an optical transmission network comprising multiple nodes (110a, 110b, 110c), the method comprising the steps of:
- receiving (610, 705) a first container (200) at a node (110a, 110b, 1 10c), the first container comprising a container header (210) and a container payload portion (220), wherein the container header (210) comprises at least information regarding a destination node of the first container (200) and wherein the container payload portion (220) includes a data portion comprising information associated with one or more client data packets directed to the destination node of the first container (200), the container header (210) further comprising occupancy information indicative of the space occupied by the data portion in the container payload portion (220) or about free space in the container payload portion (220), wherein a modular forward error correction, FEC, configuration is applied to the first container (200) by including, in the first container, first FEC information referring only to the container header (210) and second FEC information referring only to the container payload portion (220);
- determining (740), at said node (110a, 110b, 110c), whether free space is available in the container payload portion (220) for carrying a further data portion;
- providing the further data portion, the further data portion comprising information associated with further client data packets directed to the destination node of the first container (200); and
- transmitting (650, 760), in the optical domain, a second container (200) comprising a container header (210) including updated occupancy information and a container payload portion (220) including the data portion and the further data portion to a further node (110a, 110b, 110c) and further containing updated first and second FEC information.

2. Method according to claim 1, wherein the container payload portion (220) of the first container comprises the second forward error correction (FEC) information associated with said data portion and the method further comprises updating (640) the second forward error correction (FEC) information, the updated second FEC information being associated with the data portion and the further data portion for protecting said data portions against transmission errors, the container payload portion (220) of the second container (200) comprising the updated second forward error correction (FEC) information.

3. Method according to claim 1 or 2, wherein the method further comprises determining (730) whether further client data packets directed to the destination node of the first container are available at said node (110a, 110b, 11Oc).

4. Method according to anyone of the preceding claims, wherein the container header (210) comprises the first FEC information in order to protect information included in the container header (210) against transmission errors.

5. Method according to claim 2, wherein updating the second FEC information comprises including new FEC information in the payload portion (220) of the second container or updating the second FEC information received in the container payload portion (220) of the first container.

6. Method according to anyone of the preceding claims, wherein adding of the further data portion to a container payload portion (220) of the second container and updating the FEC information is performed in real-time.

7. Method according to anyone of the preceding claims, further comprising inserting information that is based on the container header (210) of the first container in the container header (210) of the second container, wherein the occupancy information is adapted based on the further data portion that is included in the container payload portion (220) of the second container.

8. Method according to anyone of the preceding claims, wherein the size of the payload portion of the first and second container is fixed and the further data portion is arranged in a non-overlapping way in the payload portion of the second container with respect to the data portion included in the first container.

9. Method according to anyone of the preceding claims, wherein the second container (200) is generated by combining the data portion included in the first container (200), the further data portion, the FEC information associated with said data portion and the FEC information associated with said further data portion by an XOR-operation.

10. Method according to any of claims 2-9, wherein the second FEC information included in the container payload portion (220) is spread within the container payload portion (220).

11. Method according to any of claims 2-10, wherein updating the second FEC information comprises a linear superimposing of a first portion and a second portion of FEC information.

12. Method according to anyone of the preceding claims, the method comprising the further steps of:
- determining (620, 720) whether the destination node of the received first container is reached;
- if the destination node of the received first container is reached then forwarding the client data packets to a client entity (130) that is coupled with said node (110a, 110b, 110c);
- otherwise, if free space is available in the container payload portion (220), determining (730) whether further client data packets directed to the destination node of the first container have been received from a client entity (130) coupled with said node (110a, 110b, 110c), and in the affirmative, generating (750) the second container based on the data portion included in the first container (200) and the further data portion.

13. Optical switching node for an optical transmission network, the optical switching node (310) comprising:
- an optical input interface (320, 325, 330) coupled with the optical transmission network for receiving an optical signal carrying a first container (200) directed to a destination node, the first container (200) comprising a container header (210) and a container payload portion (220), the container header (210) comprising at least information regarding the destination node of the first container (220), wherein the container payload portion (220) comprises a data portion including information associated with one or more client data packets the container header (210) further comprising occupancy information indicative of the space occupied by the data portion in the container payload portion (220) or about free space in the container payload portion (220), wherein a modular forward error correction, FEC, configuration is applied to the first container (200) by including, in the first container, first FEC information referring only to the container header (210) and second FEC information referring only to the container payload portion (220);
- a decoder (335) for decoding the information regarding the destination node of the first container (200);
- a client input interface (365) for coupling with a client entity (130) to receive further client data packets directed to the destination node of the first container (200);
- a processing unit (400, 330, 360) adapted to determine if free space is available in the container payload portion (220) of the first container (200) for carrying a further data portion, the processing unit (400) further adapted to generate the further data portion comprising information associated with the received further client data packets; and
- an optical output interface (350, 355, 360) for providing an optical signal representing a second container (200) comprising a container header (210) including updated occupancy information and a container payload portion (220) including the data portion and the further data portion in order to transmit said second container (200) via the optical transmission network, the second container further comprising updated first and second FEC information.

14. The optical switching node of claim 13, further comprising a container processing entity (410) to perform a real-time decoding of information included in the container header (210) based on the first FEC information of said container header (210).

15. The optical switching node of claim 13 or 14, wherein the container payload portion (220) of the first and second container (200) comprise the second forward error correction (FEC) information and the processing unit (400, 330, 360) is further adapted to update the second received forward error correction (FEC) information for insertion in the payload portion (220) of the second container (200) in order to protect the data portion and the further data portion in the second container (200) against transmission errors.

## Patentansprüche

1. Verfahren zum Übertragen von Client-Datenpaketen durch ein optisches Übertragungsnetzwerk, das mehrere Knoten (110a, 110b, 110c) umfasst, wobei das Verfahren die folgenden Schritte umfasst:
- Empfangen (610, 705) eines ersten Containers (200) an einem Knoten (110a, 110b, 110c), wobei der erste Container einen Container-Header (210) und einen Container-Nutzlastabschnitt (220) umfasst, wobei der Container-Header (210) mindestens Informationen bezüglich eines Zielknotens des ersten Containers (200) umfasst und wobei der Container-Nutzlastabschnitt (220) einen Datenabschnitt enthält umfassend Informationen, die mit einem oder mehreren Client-Datenpaketen assoziiert sind, die zu dem Zielknoten des ersten Containers (200) gerichtet sind, wobei der Container-Header (210) weiterhin Belegungsinformationen, die den durch den Datenabschnitt in dem Container-Nutzlastabschnitt (220) belegten Raum anzeigen, oder über freien Raum in dem Container-Nutzlastabschnitt (220) umfassen, wobei eine modulare Vorwärtsfehlerkorrektur-, FEC-, Ausbildung auf den ersten Container (200) angewendet wird durch Aufnehmen in dem ersten Container erster FEC-Informationen bezüglich nur des Container-Headers (210) und zweiter FEC-Informationen bezüglich nur des Container-Nutzlastabschnitts (220);
- Bestimmen (740), an dem Knoten (110a, 110b, 110c), ob freier Raum in dem Container-Nutzlastabschnitt (220) zum Führen eines weiteren Datenabschnitts verfügbar ist;
- Bereitstellen des weiteren Datenabschnitts, wobei der weitere Datenabschnitt Informationen umfasst, die mit weiteren Client-Datenpaketen assoziiert sind, die zu dem Zielknoten des ersten Containers (200) gerichtet sind; und
- Übertragen (650, 760), in dem optischen Bereich, eines zweites Containers (200) umfassend einen Container-Header (210) einschließlich aktualisierter Belegungsinformationen und eines Container-Nutzlastabschnitts (220) einschließlich des Datenabschnitts und des weiteren Datenabschnitts zu einem weiteren Knoten (110a, 110b, 110c) und weiterhin enthaltend aktualisierte erste und zweite FEC-Informationen.

2. Verfahren nach Anspruch 1, wobei der Container-Nutzlastabschnitt (220) des ersten Containers die mit dem Datenabschnitt assoziierten zweiten Vorwärtsfehlerkorrektur(FEC)-Informationen umfasst und das Verfahren weiterhin das Aktualisieren (640) der zweiten Vorwärtsfehlerkorrektur(FEC)-Informationen umfasst, wobei die aktualisierten zweiten FEC-Informationen mit dem Datenabschnitt und dem weiteren Datenabschnitt zum Schützen der Datenabschnitte vor Übertragungsfehlern assoziiert sind, wobei der Container-Nutzlastabschnitt (220) des zweiten Containers (200) die aktualisierten zweiten Vorwärtsfehlerkorrektur(FEC)-Informationen umfasst.

3. Verfahren nach Anspruch 1 oder 2, wobei das Verfahren weiterhin das Bestimmen (730) umfasst, ob weitere Client-Datenpakete, die zu dem Zielknoten des ersten Containers gerichtet sind, an dem Knoten (110a, 110b, 110c) verfügbar sind.

4. Verfahren nach einem der vorhergehenden Ansprüche, wobei der Container-Header (210) die ersten FEC-Informationen umfasst, um in dem Container-Header (210) enthaltene Informationen vor Übertragungsfehlern zu schützen.

5. Verfahren nach Anspruch 2, wobei das Aktualisieren der zweiten FEC-Informationen das Aufnehmen neuer FEC-Informationen in den Nutzlastabschnitt (220) des zweiten Containers oder das Aktualisieren der in dem Container-Nutzlastabschnitt (220) des ersten Containers empfangenen zweiten FEC-Informationen umfasst.

6. Verfahren nach einem der vorhergehenden Ansprüche, wobei das Hinzufügen des weiteren Datenabschnitts zu einem Container-Nutzlastabschnitt (220) des zweiten Containers und das Aktualisieren der FEC-Informationen in Echtzeit durchgeführt wird.

7. Verfahren nach einem der vorhergehenden Ansprüche, weiterhin umfassend das Einfügen von Informationen, die auf dem Container-Header (210) des ersten Containers basieren, in den Container-Header (210) des zweiten Containers, wobei die Belegungsinformationen auf Basis des weiteren Datenabschnitts angepasst werden, der in dem Container-Nutzlastabschnitt (220) des zweiten Containers enthalten ist.

8. Verfahren nach einem der vorhergehenden Ansprüche, wobei die Größe des Nutzlastabschnitts des ersten und zweiten Containers fest ist und der weitere Datenabschnitt auf nichtüberlappende Weise in dem Nutzlastabschnitt des zweiten Containers bezüglich des in dem ersten Container enthaltenen Datenabschnitts angeordnet ist.

9. Verfahren nach einem der vorhergehenden Ansprüche, wobei der zweite Container (200) durch Kombinieren des in dem ersten Container (200) enthaltenen Datenabschnitts, des weiteren Datenabschnitts, der mit dem Datenabschnitt assoziierten FEC-Informationen und der mit dem weiteren Datenabschnitt assoziierten FEC-Informationen durch eine XOR-Operation generiert wird.

10. Verfahren nach einem der Ansprüche 2-9, wobei die in dem Container-Nutzlastabschnitt (220) enthaltenen zweiten FEC-Informationen innerhalb des Container-Nutzlastabschnitts (220) verbreitet werden.

11. Verfahren nach einem der Ansprüche 2-10, wobei das Aktualisieren der zweiten FEC-Informationen eine lineare Überlagerung eines ersten Abschnitts und eines zweiten Abschnitts von FEC-Informationen umfasst.

12. Verfahren nach einem der vorhergehenden Ansprüche, wobei das Verfahren die folgenden weiteren Schritte umfasst:
- Bestimmen (620, 720), ob der Zielknoten des empfangenen ersten Containers erreicht ist;
- falls der Zielknoten des empfangenen ersten Containers erreicht ist, dann Weiterleiten der Client-Datenpakete an eine Client-Entität (130), die mit dem Knoten (110a, 110b, 110c) gekoppelt ist;
- ansonsten, falls freier Raum in dem Container-Nutzlastabschnitt (220) verfügbar ist, Bestimmen (730), ob weitere zu dem Zielknoten des ersten Containers gerichtete Client-Datenpakete von einer mit dem Knoten (110a, 110b, 110c) gekoppelten Client-Entität (130) empfangen worden sind, und bei Bejahung, Generieren (750) des zweiten Containers auf Basis des in dem ersten Container (200) enthaltenen Datenabschnitts und des weiteren Datenabschnitts.

13. Optischer Schaltknoten für ein optisches Übertragungsnetzwerk, wobei der optische Schaltknoten (310) umfasst:
- eine optische Eingangsschnittstelle (320, 325, 330), die mit dem optischen Übertragungsnetzwerk gekoppelt ist, um ein optisches Signal zu empfangen, das einen ersten Container (200) führt, der zu einem Zielknoten gerichtet ist, wobei der erste Container (200) einen Container-Header (210) und einen Container-Nutzlastabschnitt (220) umfasst, wobei der Container-Header (210) mindestens Informationen bezüglich des Zielknotens des ersten Containers (220) umfasst, wobei der Container-Nutzlastabschnitt (220) einen Datenabschnitt einschließlich Informationen umfasst, die mit einem oder mehreren Client-Datenpaketen assoziiert sind, wobei der Container-Header (210) weiterhin Belegungsinformationen, die den durch den Datenabschnitt in dem Container-Nutzlastabschnitt (220) belegten Raum anzeigen, oder über freien Raum in dem Container-Nutzlastabschnitt (220) umfassen, wobei eine modulare Vorwärtsfehlerkorrektur-, FEC-, Ausbildung auf den ersten Container (200) angewendet wird durch Aufnehmen in dem ersten Container erster FEC-Informationen bezüglich nur des Container-Headers (210) und zweiter FEC-Informationen bezüglich nur des Container-Nutzlastabschnitts (220);
- einen Decodierer (335) zum Decodieren der Informationen bezüglich des Zielknotens des ersten Containers (200);
- eine Client-Eingangsschnittstelle (365) zum Koppeln mit einer Client-Entität (130), um weitere Client-Datenpakete zu empfangen, die zu dem Zielknoten des ersten Containers (200) gerichtet sind;
- eine Verarbeitungseinheit (400, 330, 360), die ausgelegt ist, um zu bestimmen, ob freier Raum in dem Container-Nutzlastabschnitt (220) des ersten Containers (200) zum Führen eines weiteren Datenabschnitts verfügbar ist, wobei die Verarbeitungseinheit (400) weiterhin ausgelegt ist zum Generieren des weiteren Datenabschnitts umfassend Informationen, die mit den empfangenen weiteren Client-Datenpaketen assoziiert sind; und
- eine optische Ausgangsschnittstelle (350, 355, 360) zum Liefern eines optischen Signals, das einen zweiten Container (200) darstellt, umfassend einen Container-Header (210) einschließlich aktualisierter Bewegungsinformationen und einen Container-Nutzlastabschnitt (220) einschließlich des Datenabschnitts und des weiteren Datenabschnitts, um den zweiten Container (200) über das optische Übertragungsnetzwerk zu übertragen, wobei der zweite Container weiterhin aktualisierte erste und zweite FEC-Informationen umfasst.

14. Optischer Schaltknoten nach Anspruch 13, weiterhin umfassend eine Container-Verarbeitungsentität (410) zum Durchführen einer Echtzeitdecodierung von in dem Container-Header (210) enthaltenen Informationen auf Basis der ersten FEC-Informationen des Container-Headers (210).

15. Optischer Schaltknoten nach Anspruch 13 oder 14, wobei der Container-Nutzlastabschnitt (220) des ersten und zweiten Containers (200) die zweiten Vorwärtsfehlerkorrektur(FEC)-Informationen umfasst und die Verarbeitungseinheit (400, 330, 360) weiterhin ausgelegt ist zum Aktualisieren der zweiten empfangenen Vorwärtsfehlerkorrektur(FEC)-Informationen zum Einfügen in den Nutzlastabschnitt (220) des zweiten Containers (200), um den Datenabschnitt und den weiteren Datenabschnitt in dem zweiten Container (200) vor Übertragungsfehlern zu schützen.

## Revendications

1. Procédé de transmission de paquets de données client par le biais d'un réseau de transmission optique comprenant de multiples nœuds (110a, 110b, 110c), le procédé comprenant les étapes consistant à :
- recevoir (610, 705) un premier conteneur (200) au niveau d'un nœud (110a, 110b, 110c), le premier conteneur comprenant un en-tête de conteneur (210) et une portion de données utiles de conteneur (220), dans lequel l'en-tête de conteneur (210) comprend au moins des informations concernant un nœud de destination du premier conteneur (200) et dans lequel la portion de données utiles de conteneur (220) inclut une portion de données comprenant des informations associées à un ou plusieurs paquets de données client dirigés vers le nœud de destination du premier conteneur (200), l'en-tête de conteneur (210) comprenant en outre des informations d'occupation indicatives de l'espace occupé par la portion de données dans la portion de données utiles de conteneur (220) ou concernant un espace libre dans la portion de données utiles de conteneur (220), dans lequel une configuration modulaire de correction d'erreur sans voie de retour, FEC, est appliquée au premier conteneur (200) par l'inclusion, dans le premier conteneur, de premières informations FEC faisant référence uniquement à l'en-tête de conteneur (210) et de secondes informations FEC faisant référence uniquement à la portion de données utiles de conteneur (220) ;
- déterminer (740), au niveau dudit nœud (110a, 110b, 110c), si un espace libre est disponible dans la portion de données utiles de conteneur (220) pour acheminer une portion de données supplémentaire ;
- fournir la portion de données supplémentaire, la portion de données supplémentaire comprenant des informations associées à des paquets de données client supplémentaires dirigés vers le nœud de destination du premier conteneur (200) ; et
- transmettre (650, 760), dans le domaine optique, un second conteneur (200) comprenant un en-tête de conteneur (210) incluant des informations d'occupation actualisées et une portion de données utiles de conteneur (220) incluant la portion de données et la portion de données supplémentaire à un nœud (110a, 110b, 110c) supplémentaire et contenant en outre des premières et secondes informations FEC actualisées.

2. Procédé selon la revendication 1, dans lequel la portion de données utiles de conteneur (220) du premier conteneur comprend les secondes informations de correction d'erreur sans voie de retour (FEC) associées à ladite portion de données et le procédé comprend en outre l'actualisation (640) des secondes informations de correction d'erreur sans voie de retour (FEC), les secondes informations FEC actualisées étant associées à la portion de données et à la portion de données supplémentaire pour protéger lesdites portions de données contre des erreurs de transmission, la portion de données utiles de conteneur (220) du second conteneur (200) comprenant les secondes informations de correction d'erreur sans voie de retour (FEC) actualisées.

3. Procédé selon la revendication 1 ou 2, dans lequel le procédé comprend en outre la détermination (730) si des paquets de données client supplémentaires dirigés vers le nœud de destination du premier conteneur sont disponibles ou non au niveau dudit nœud (110a, 110b, 110c).

4. Procédé selon l'une quelconque des revendications précédentes, dans lequel l'en-tête de conteneur (210) comprend les premières informations FEC afin de protéger des informations incluses dans l'en-tête de conteneur (210) contre des erreurs de transmission.

5. Procédé selon la revendication 2, dans lequel l'actualisation des secondes informations FEC comprend l'inclusion de nouvelles informations FEC dans la portion de données utiles (220) du second conteneur ou l'actualisation des secondes informations FEC reçues dans la portion de données utiles de conteneur (220) du premier conteneur.

6. Procédé selon l'une quelconque des revendications précédentes, dans lequel l'ajout de la portion de données supplémentaire à une portion de données utiles de conteneur (220) du second conteneur et l'actualisation des informations FEC sont réalisés en temps réel.

7. Procédé selon l'une quelconque des revendications précédentes, comprenant en outre l'insertion d'informations qui sont basées sur l'en-tête de conteneur (210) du premier conteneur dans l'en-tête de conteneur (210) du second conteneur, dans lequel les informations d'occupation sont adaptées sur la base de la portion de données supplémentaire qui est incluse dans la portion de données utiles de conteneur (220) du second conteneur.

8. Procédé selon l'une quelconque des revendications précédentes, dans lequel la taille de la portion de données utiles des premier et second conteneurs est fixe et la portion de données supplémentaire est agencée de manière non chevauchante dans la portion de données utiles du second conteneur vis-à-vis de la portion de données incluse dans le premier conteneur.

9. Procédé selon l'une quelconque des revendications précédentes, dans lequel le second conteneur (200) est généré par la combinaison de la portion de données incluse dans le premier conteneur (200), de la portion de données supplémentaire, des informations FEC associées à ladite portion de données et des informations FEC associées à ladite portion de données supplémentaire par une opération OU-EXCLUSIF.

10. Procédé selon l'une quelconque des revendications 2 à 9, dans lequel les secondes informations FEC incluses dans la portion de données utiles de conteneur (220) sont diffusées au sein de la portion de données utiles de conteneur (220).

11. Procédé selon l'une quelconque des revendications 2 à 10, dans lequel l'actualisation des secondes informations FEC comprend une superposition linéaire d'une première portion et d'une seconde portion d'informations FEC.

12. Procédé selon l'une quelconque des revendications précédentes, le procédé comprenant les étapes supplémentaires consistant à :
- déterminer (620, 720) si le nœud de destination du premier conteneur reçu est atteint ;
- si le nœud de destination du premier conteneur reçu est atteint, alors transférer les paquets de données client à une entité client (130) qui est couplée audit nœud (110a, 110b, 110c) ;
- sinon, si un espace libre est disponible dans la portion de données utiles de conteneur (220), déterminer (730) si des paquets de données client supplémentaires dirigés vers le nœud de destination du premier conteneur ont été reçus depuis une entité client (130) couplée audit nœud (110a, 110b, 110c), et dans l'affirmative, générer (750) le second conteneur sur la base de la portion de données incluse dans le premier conteneur (200) et de la portion de données supplémentaire.

13. Nœud de commutation optique pour un réseau de transmission optique, le nœud de commutation optique (310) comprenant :
- une interface d'entrée optique (320, 325, 330) couplée au réseau de transmission optique pour recevoir un signal optique acheminant un premier conteneur (200) dirigé vers un nœud de destination, le premier conteneur (200) comprenant un en-tête de conteneur (210) et une portion de données utiles de conteneur (220), l'en-tête de conteneur (210) comprenant au moins des informations concernant le nœud de destination du premier conteneur (220), dans lequel la portion de données utiles de conteneur (220) comprend une portion de données incluant des informations associées à un ou plusieurs paquets de données client, l'en-tête de conteneur (210) comprenant en outre des informations d'occupation indicatives de l'espace occupé par la portion de données dans la portion de données utiles de conteneur (220) ou concernant un espace libre dans la portion de données utiles de conteneur (220), dans lequel une configuration modulaire de correction d'erreur sans voie de retour, FEC, est appliquée au premier conteneur (200) par l'inclusion, dans le premier conteneur, de premières informations FEC faisant référence uniquement à l'en-tête de conteneur (210) et de secondes informations FEC faisant référence uniquement à la portion de données utiles de conteneur (220) ;
- un décodeur (335) pour décoder des informations relatives au nœud de destination du premier conteneur (200) ;
- une interface d'entrée client (365) pour un couplage avec une entité client (130) pour recevoir des paquets de données client supplémentaires dirigés vers le nœud de destination du premier conteneur (200) ;
- une unité de traitement (400, 330, 360) adaptée pour déterminer si un espace libre est disponible dans la portion de données utiles de conteneur (220) du premier conteneur (200) afin d'acheminer une portion de données supplémentaire, l'unité de traitement (400) étant en outre adaptée pour générer la portion de données supplémentaire comprenant des informations associées aux paquets de données client supplémentaires reçus ; et
- une interface de sortie optique (350, 355, 360) pour fournir un signal optique représentant un second conteneur (200) comprenant un en-tête de conteneur (210) incluant des informations d'occupation actualisées et une portion de données utiles de conteneur (220) incluant la portion de données et la portion de données supplémentaire afin de transmettre ledit second conteneur (200) via le réseau de transmission optique, le second conteneur comprenant en outre des premières et secondes informations FEC actualisées.

14. Nœud de commutation optique selon la revendication 13, comprenant en outre une entité de traitement de conteneur (410) pour réaliser un décodage en temps réel d'informations incluses dans l'en-tête de conteneur (210) sur la base des premières informations FEC dudit en-tête de conteneur (210).

15. Nœud de commutation optique selon la revendication 13 ou 14, dans lequel la portion de données utiles de conteneur (220) des premier et second conteneurs (200) comprend les secondes informations de correction d'erreur sans voie de retour (FEC) et l'unité de traitement (400, 330, 360) est en outre adaptée pour actualiser les secondes informations de correction d'erreur sans voie de retour (FEC) reçues pour une insertion dans la portion de données utiles (220) du second conteneur (200) afin de protéger la portion de données et la portion de données supplémentaire dans le second conteneur (200) contre des erreurs de transmission.
